# EUROPEAN PATENT SPECIFICATION

(11) **EP 2 881 306 B1**
(45) Date of publication and mention of the grant of the patent: **04.07.2018**
(21) Application number: 14191081.0
(22) Date of filing: 30.10.2014
(51) Int. Cl.: B62D 7/04, B62D 11/20, B62D 5/04, B62D 11/04

(54) **Traveling vehicle**
Fahrzeug
Véhicule de déplacement

(30) Priority: 05.12.2013 JP 2013252480
(43) Date of publication of application: 10.06.2015
(73) Proprietor: Murata Machinery, Ltd., Kyoto-shi, Kyoto 601-8326 (JP)
(72) Inventor: Shinoda, Tomoyuki, Inuyama-Shi, 48-8502 (JP); Goto, Naoki, Inuyama-shi, 484-8502 (JP)
(74) Representative: Zimmermann, Tankred Klaus

(56) References cited:
- EP-A2- 2 218 630
- JP-A- 2009 083 660
- US-A1- 2006 162 987
- US-A1- 2012 186 893

## Description

### BACKGROUND OF THE INVENTION

### 1. Field of the Invention

The present invention relates to a traveling vehicle in which steering is performed by making rotational speeds of a pair of wheels different.

### 2. Description of the Related Art

Heretofore, as one of traveling vehicles that automatically travel on a floor to convey cargos, a traveling vehicle in which a steering unit including a pair of wheels, and a pair of motors which independently drive these respective wheels is turnably mounted on a base body of the traveling vehicle is put to practical use.

This traveling vehicle is capable of independently driving the pair of wheels respectively, and is capable of going straight when rotational speeds of the pair of wheels are the same, and enables steering by making the rotational speeds of the pair of wheels different.

For example, a traveling vehicle described in JP 2008-52324 A is a traveling vehicle in which a steering unit is mounted on a base body. In a case where, by comparing a difference between the numbers of rotations of right and left wheels with change of a turning angle of the steering unit, inconsistency of these is a predetermined value or more, it is considered that a slip occurs, and the traveling vehicle stops traveling.

EP 2 218 630 A2, which is considered as the closest prior art according to the preamble of claim 1, discloses a lawnmower comprising caster wheels configured to switch between an engaged state and a disengaged state so as to operate between free steering and forced steering.

US 2006/0162987 A1 discloses a steering angle-restricted steering system for an industrial truck with automatic steering.

JP 2009-083660 discloses a traveling truck.

US 2012/0186893 A1 discloses a movable and steerable device that has a platform with four wheel assemblies, any of which is drivable and steerable.

### BRIEF SUMMARY OF THE INVENTION

It is an object of the invention to provide a traveling vehicle that restricts movement in an unexpected direction in a case where the traveling vehicle is stopped in an emergency during traveling.

This object is achieved by a traveling vehicle according to claim 1.

It has been found out by the inventors of the present invention that the conventional traveling vehicle described above and including the steering wheel unit is stopped in an emergency during traveling, even if stop timing of the pair of wheels included in the steering unit deviates slightly, the steering unit turns by the deviation amount, resulting in a possibility that the traveling vehicle advances in an unexpected direction by inertia.

In order to achieve the above object, a traveling vehicle according to the present invention is a traveling vehicle for traveling on a floor surface, characterized by including a base body, and a steering unit turnably mounted on the base body, the steering unit including a pair of wheels and a pair of motors that independently drives the respective wheels, the traveling vehicle further including brake means for restricting turning of the steering unit with respect to the base body when supplied power is cut off, and releasing restriction when power is supplied.

According to this, when the power supply to the brake means is cut off, relative turning of the steering unit with respect to the base body is restricted, and therefore the traveling vehicle can be prevented from moving in an unexpected direction by inertia even when stop timing of the wheels included by the steering unit is different.

A pair of the motors and the brake means may be connected to a single cutoff device so as to cut off power supply to the motors and the brake means at a time.

According to this, when the power supply to the motors is cut off, the turning of the steering unit with respect to the base body can be reliably restricted, and therefore safety can be enhanced.

A pair of the motors and the brake means may be connected to a plurality of cutoff devices respectively so as to independently cut off power supply to the motors and the brake means.

According to this, the wheels can be driven in a state where the turning of the steering unit with respect to the base body is restricted, so that it is possible to improve straight movement stability or the like of the traveling vehicle that travels by motor driving.

The brake means includes a braking part that is mounted on the base body at a position separated from a pivot of the steering unit, and a transmission mechanism that transmits braking force of the braking part to the steering unit.

The transmission mechanism may include a base body side sprocket that is pivotally attached to the base body, a driving side sprocket that is mounted on the steering unit, and a chain that connects the base body side sprocket, and the driving side sprocket, and the braking part may restrict rotation of the base body side sprocket with respect to the base body.

According to this, the brake means can be disposed at a position different from a drive unit in the base body, and therefore it is possible to improve a degree of freedom of design of the brake means. For example, the traveling vehicle can be reduced in size.

According to the present invention, even in a case where the traveling vehicle which is traveling is stopped in an emergency, it is possible to restrict an advancing direction of the traveling vehicle by inertia.

### BRIEF DESCRIPTION OF THE DRAWINGS

FIG. 1 is a plan view schematically illustrating a traveling vehicle with a base body omitted;
FIG. 2 is a side view schematically illustrating the traveling vehicle along with a cross section of the base body;
FIG. 3 is a side view schematically illustrating a mounting state of a steering unit and the base body;
FIG. 4 is a block diagram schematically illustrating a connection state of motors and brake means;
FIG. 5 is a block diagram schematically illustrating another connection state of the motors and the brake means;
FIG. 6 is a plan view schematically illustrating another traveling vehicle with a base body and the like omitted; and
FIG. 7 is a block diagram schematically illustrating another connection state of the motors and the brake means.

### DETAILED DESCRIPTION OF PREFERRED EMBODIMENTS

An embodiment of a traveling vehicle according to the present invention is now described with reference to the drawings. The following embodiment is a merely exemplified example of the traveling vehicle according to the present invention. Accordingly, the scope of the present invention is defined by wording of the claims in reference to the following embodiment, and is not limited only by the following embodiment. Therefore, components which are not described in an independent claim showing a top concept of the present invention in components in the following embodiment are not necessarily needed to achieve an object of the present invention, but described as components that configure more preferable aspect.

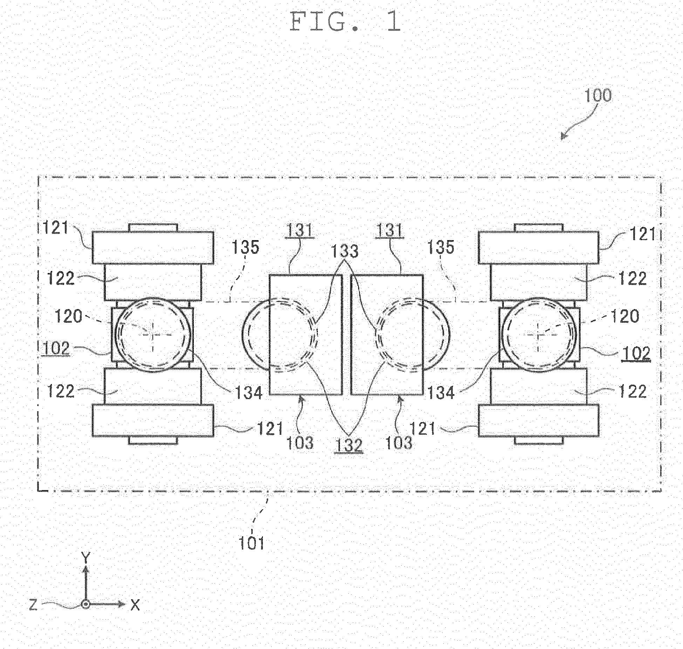

FIG. 1 is a plan view schematically illustrating the traveling vehicle with a base body omitted.

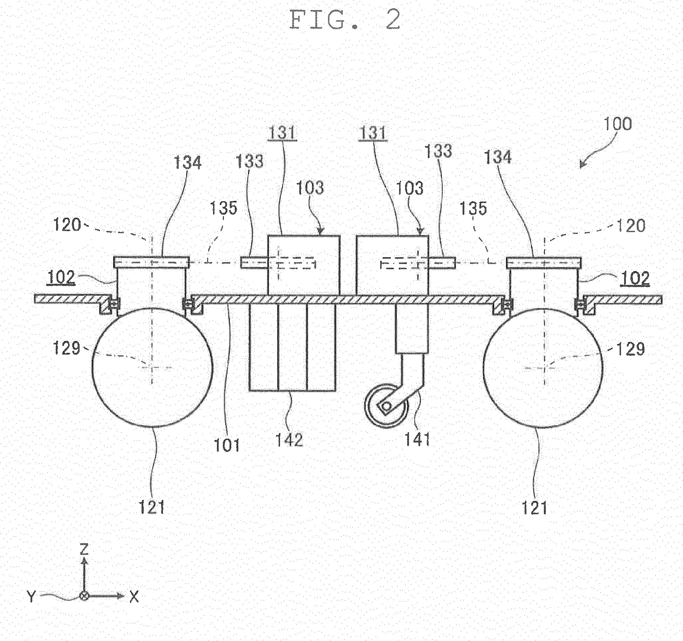

FIG. 2 is a side view schematically illustrating the traveling vehicle along with a cross section of the base body.

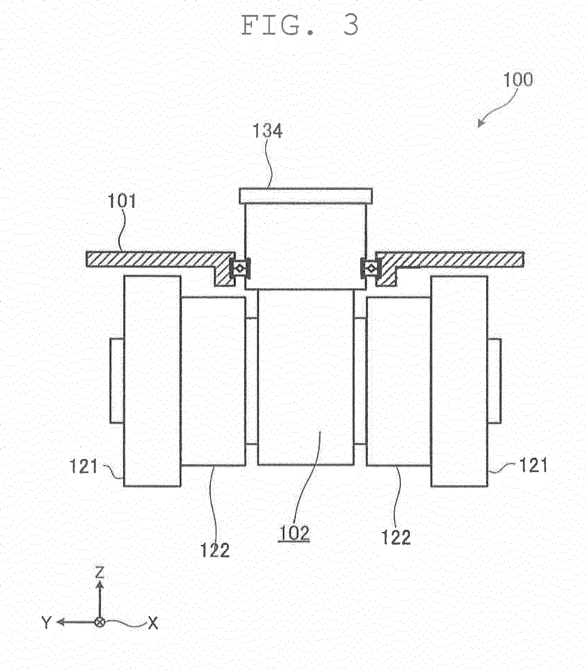

FIG. 3 is a side view schematically illustrating a mounting state of a steering unit and the base body.

As illustrated in these drawings, a traveling vehicle 100 is a vehicle that includes a base body 101, steering units 102, and brake means 103, and is capable of automatically traveling on a floor surface. In the case of this embodiment, the traveling vehicle 100 includes two pairs of the steering unit 102 and the brake means 103. The traveling vehicle 100 is used as an automatic conveyance vehicle that automatically conveys a cargo by including a placing part (not illustrated) or a transfer device (not illustrated) mounted on the base body 101.

The base body 101 is a part which serves as a structural base of the traveling vehicle 100. For example, examples of the base body 101 can include a frame structure, and the like.

Each of the steering units 102 is a unit that is turnably mounted on the base body 101. In the case of this embodiment, the steering unit 102 can turn with respect to the base body 101 about a pivot 120 that vertically extends, with respect to the base body 101 which horizontally expands. The steering unit 102 is disposed between the base body 101 and the floor surface, and has a function of supporting the base body 101 at a predetermined height with respect to the floor surface. In the case of this embodiment, the steering unit 102 is mounted on the base body 101 via a bearing. A part of the steering unit 102 is disposed so as to passes through the base body 101 to protrude above the base body 101.

The steering unit 102 includes wheels 121, and motors 122.

A pair of the wheels 121 is provided on the steering unit 102. In the case of this embodiment, the pair of wheels 121 is mounted on the steering unit 102 so as to rotate about a single axle that horizontally extends.

The motors 122 are driving sources that independently drive the respective wheels 121. The motors 122 includes brake mechanisms that stop the traveling vehicle 100 by forcibly stopping rotation of shafts of the motors 122 when power for driving is cut off.

Each brake means 103 is a device that restricts turning of the steering unit 102 with respect to the base body 101 when supplied power is cut off, and releases restriction of the steering units 102 when power is supplied. In the case of this embodiment, the brake means 103 includes a braking part 131, and a transmission mechanism 132. The brake means 103 is disposed above the base body 101.

The braking part 131 is a device that is disposed at a position separated from the pivot 120 of the steering unit, and mounted on the base body 101. Specifically, for example, the braking part 131 includes urging means, restriction means for normally restricting operation of the transmission mechanism 132 by urging force of the urging means, and releasing means for driving the restriction means against the urging force of the urging means by electromagnetic action when power is supplied, and releasing the restriction of the operation of the transmission mechanism 132.

The transmission mechanism 132 is a mechanical structure that transmits braking force of the braking part 131 disposed apart from the steering unit 102 to the steering unit 102. In the case of this embodiment, the transmission mechanism 132 includes a base body side sprocket 133, a driving side sprocket 134, and a chain 135.

The base body side sprocket 133 is a sprocket that is rotatably pivotally attached to the base body 101. Specifically, the base body side sprocket 133 is attached to the base body 101 so as to rotate about an axis parallel to the pivot 120.

In the base body side sprocket 133, a rotor is fixedly mounted on a shaft body that rotates integrally with the base body side sprocket 133, via a hub, and the restriction means (e.g., an armature operated by an electromagnetic coil) of the braking part 131 is pressed against the rotor by the urging force of the urging means(e.g., a torque spring), so that the rotation operation is indirectly restricted.

The rotation operation may be directly restricted by nipping the base body side sprocket 133 with the restriction means of the braking part 131, or the like.

The driving side sprocket 134 is a sprocket that is mounted on the steering units 102. Specifically, the driving side sprocket 134 is fixed to a part, protruding upward from the base body 101, of the steering unit 102, so as to be turnable about the pivot 120 along with the steering unit 102.

The chain 135 is an endless belt-like member that connects the base body side sprocket 133, and the driving side sprocket 134. The chain 135 is not particularly limited, and examples of the chain 135 include a chain made of metal or resin (rubber), and the like. In the drawing, the chain 135 is illustrated by dashed lines.

According to the brake means 103 described above, normally (in a case where power is supplied to the braking part 131), rotation of the base body side sprocket 133 is not regulated, and the chain 135 can be freely operated. Therefore, the driving side sprocket 134 freely turns together with the turning of the steering unit 102. Accordingly, the traveling vehicle 100 can be freely steered. On the other hand, when no power is supplied to the braking part 131, the braking part 131 restricts the rotation of the base body side sprocket 133 with respect to the base body 101. Consequently, the operation of the chain 135 stretched between the base body side sprocket 133 and the driving side sprocket 134 is also restricted. Accordingly, the turning of the steering unit 102 via the driving side sprocket 134 engaged with the chain 135 is restricted.

By the above operation, the turning of the steering unit 102 is restricted with respect to the base body 101, and therefore the steering unit 102 cannot turn with respect to the base body 101 during generation of braking force in the brake means 103, so that a traveling direction of the traveling vehicle 100 is stabilized.

The traveling vehicle 100 includes a power supply 142 such as a battery, and an auxiliary wheel 141 that secures stable traveling of the traveling vehicle 100, particularly stable traveling during turning.

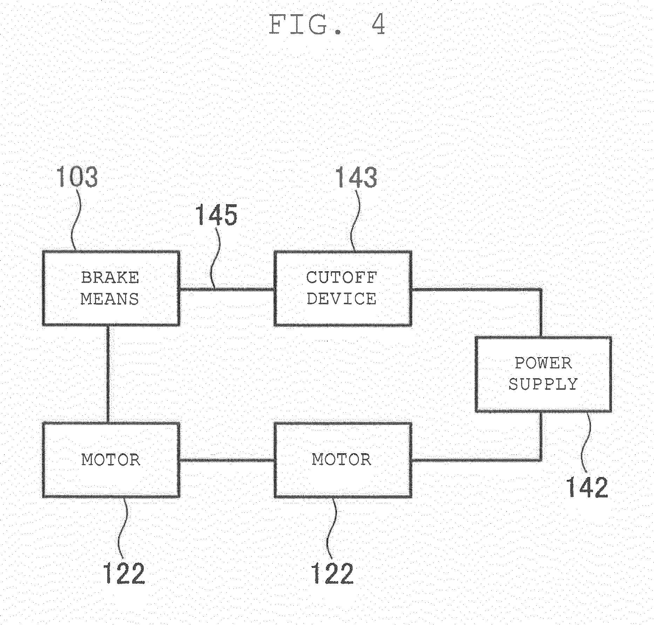

FIG. 4 is a block diagram schematically illustrating a connection state of the motors and the brake means.

As illustrated in FIG. 4, in the traveling vehicle 100, the motors 122 and the brake means 103 are connected in series by power supply line 145 so as to cut off power supply to the pair of motors 122, and the brake means 103. In the case of this embodiment, a cutoff device 143 such as an emergency stop button capable of stopping supplying power in an emergency by human operation is interposed and connected to the supply line 145.

According to the above configuration, in a case where an accident case requiring stop in an emergency occurs in the traveling vehicle 100 or in an environment in which the traveling vehicle 100 is traveling, an operator or the like operates the cutoff device 143, so that the traveling of the traveling vehicle 100 can be stopped, and the turning of the steering unit 102 to the base body 101 can be restricted. Accordingly, it is possible to lower occurrence of a defect such as unintentional operation of the traveling vehicle 100 by inertia, as much as possible.

The brake means 103 and the motors 122 are not always connected in series. For example, the power supply 142 may serve as a common power supply source, and power supply from the power supply 142 to the brake means 103 and the motors 122 may be cut off by operation of a single cutoff device 143.

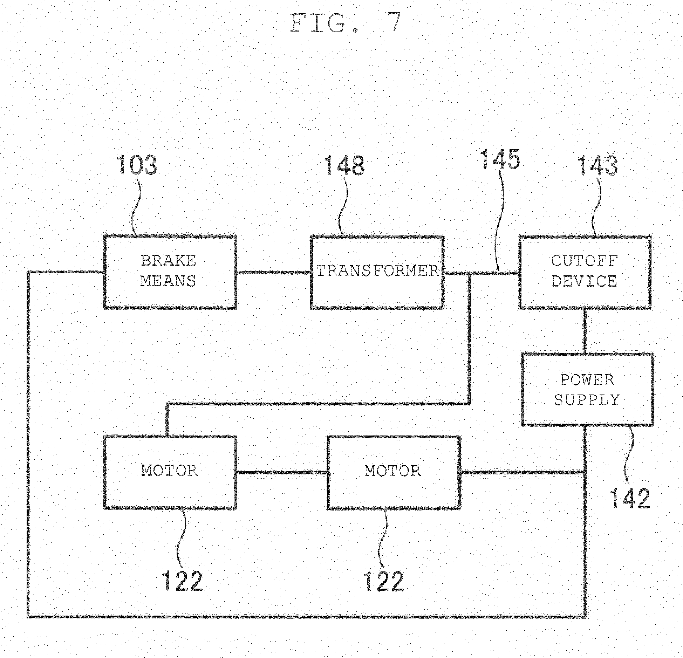

Specifically, in a case where a driving voltage of motors 122, and a driving voltage of the brake means 103 are different, the brake means 103 and the motors 122 are connected to the common cutoff device 143, as illustrated in FIG. 7. However, power transformed by a transformer 148 is supplied to the brake means 103, power is directly supplied to the motors 122, and the brake means 103 and the motors 122 are connected in parallel to each other. Even in this case, power supply to the brake means 103 and the motors 122 can be cut off by the operation of the single cutoff device 143 at a time.

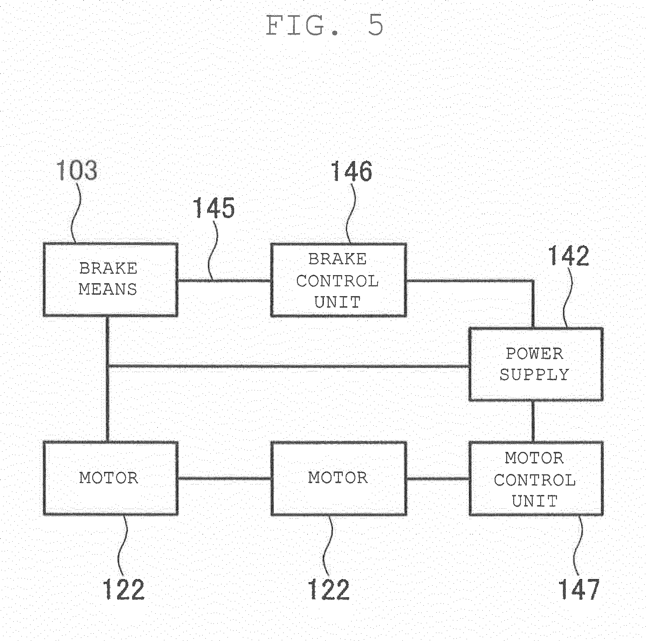

FIG. 5 is a block diagram schematically illustrating another connection state of the motors and the brake means.

As illustrated in FIG. 5, in the traveling vehicle 100, a pair of the motors 122 and the brake means 103 are connected in parallel by the power supply line 145 so as to independently cut off power supply to the pair of motors 122, and the brake means 103. In the case of this embodiment, the traveling vehicle 100 includes a brake control unit 146 that functions as a cutoff device 143 capable of opening and closing the supply line 145 by execution of a program by a computer, and a motor control unit 147.

According to the above configuration, the brake control unit 146 brings the supply line 145 into a close state, generates braking force by cutting off the power supply to the brake means 103, and restricts turning of the steering unit 102 with respect to the base body 101. On the other hand, the motor control unit 147 brings the supply line 145 into an open state, and the traveling vehicle 100 is allowed to travel in a state of restricting turning by continuously supplying power to the motors 122, so that traveling stability of the traveling vehicle 100 can be secured.

The present invention is not limited to the above embodiment. For example, another embodiment obtained by optionally combining the components described in the present description or by removing some of the components described in the present description may be the embodiment of the present invention. Any variations of the present embodiment to be conceived by those skilled in the art without departing from the scope of the present invention.

For example, the brake means 103 may be means for directly restricting the turning of the steering units 102.

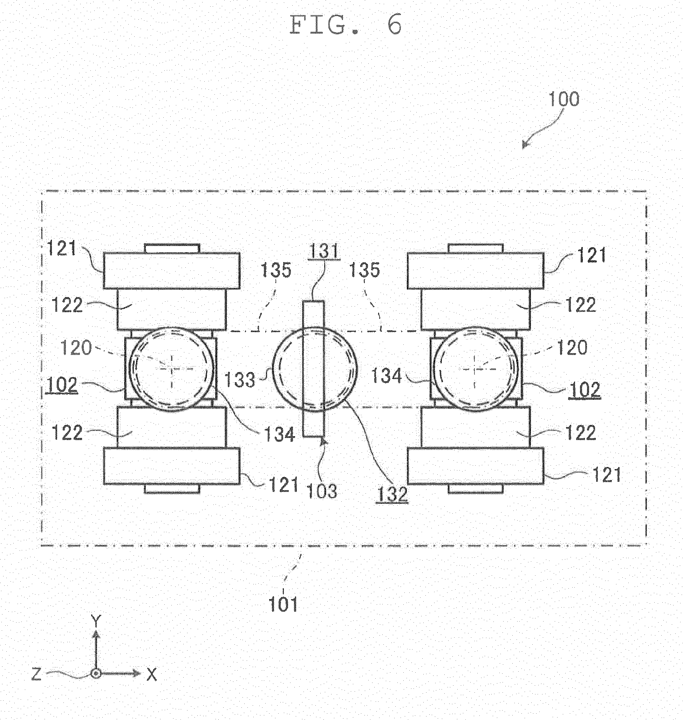

As illustrated in FIG. 6, the single brake means 103 may regulate the turning of a plurality of the steering units 102 (two in the case of this embodiment) with respect to the base body 101. Consequently, the traveling vehicle 100 can be further reduced in size.

The traveling vehicle 100 may include a power supply 142 that supplies power to the brake means 103, and a power supply 142 that supplies power to the motors 122, and form respective independent circuits.

The traveling vehicle 100 may include only a single steering unit 102.

The present invention can be utilized for an unmanned conveyance vehicle that automatically conveys a cargo in a warehouse or in a factory.

## Claims

1. A traveling vehicle (100) for traveling on a floor surface, comprising:
a base body (101); and
a steering unit (102) turnably mounted on the base body (101),
the steering unit (102) including:
a pair of wheels (121); and
a pair of motors (122) that independently drives the respective wheels,
the traveling vehicle further comprising
brake means (103) for restricting turning of the steering unit (102) with respect to the base body (101) when supplied power is cut off, and releasing restriction when power is supplied,
**characterized in that** the brake means (103) include:
a braking part (131) that is mounted on the base body (101)at a position separated from a pivot (120) of the steering unit (102); and
a transmission mechanism (132) that transmits braking force of the braking part (131) to the steering unit (102).

2. The traveling vehicle according to claim 1, **characterized in that**
a pair of the motors (122) and the brake means (103) are connected to a single cutoff device (143) so as to cut off power supply to the motors (122) and the brake means (103) at a time.

3. The traveling vehicle according to claim 1, **characterized in that**
a pair of the motors (122) and the brake means (103) are connected to a plurality of cutoff devices (143) respectively so as to independently cut off power supply to the motors (122) and the brake means (103).

4. The traveling vehicle according to claim 1, **characterized in that**
the transmission mechanism (132) includes:
a base body side sprocket (133) that is pivotally attached to the base body (101);
a driving side sprocket (134) that is mounted on the steering unit (102); and
a chain (135) that connects the base body side sprocket (133), and the driving side sprocket (134), and
the braking part (131) restricts rotation of the base body side sprocket (133) with respect to the base body (101).

## Patentansprüche

1. Ein bewegliches Fahrzeug (100) zum Bewegen auf einer Bodenoberfläche, das folgende Merkmale aufweist:
einen Basiskörper (101); und
eine Lenkeinheit (102), die drehbar auf dem Basiskörper (101) montiert ist,
wobei die Lenkeinheit (102) Folgendes umfasst:
ein Paar von Rädern (121); und
ein Paar von Motoren (122), das die jeweiligen Räder unabhängig antreibt,
wobei das bewegliche Fahrzeug ferner Folgendes aufweist:
eine Bremseinrichtung (103) zum Einschränken einer Drehung der Lenkeinheit (102) in Bezug auf den Basiskörper (101), wenn eine zugefügte Leistung unterbrochen wird, und zum Freigeben einer Einschränkung, wenn eine Leistung zugeführt wird,
**dadurch gekennzeichnet, dass** die Bremseinrichtung (103) Folgendes umfasst:
ein Bremsteil (131), das auf dem Basiskörper (101) an einer Position montiert ist, die von einer Schwenkvorrichtung (120) der Lenkeinheit (102) getrennt ist; und
einen Übertragungsmechanismus (132), der eine Bremskraft des Bremsteils (131) auf die Lenkeinheit (102) überträgt.

2. Das bewegliche Fahrzeug gemäß Anspruch 1, das **dadurch gekennzeichnet ist, dass** ein Paar der Motoren (122) und die Bremseinrichtung (103) mit einer einzelnen Unterbrechungsvorrichtung (143) verbunden sind, um eine Leistungszufuhr zu den Motoren (122) und zu der Bremseinrichtung (103) gleichzeitig zu unterbrechen.

3. Das bewegliche Fahrzeug gemäß Anspruch 1, das **dadurch gekennzeichnet ist, dass**
ein Paar der Motoren (122) und die Bremseinrichtung (103) jeweils mit einer Mehrzahl von Unterbrechungsvorrichtungen (143) verbunden ist, um eine Leistungszufuhr zu den Motoren (122) und zu der Bremseinrichtung (103) unabhängig zu unterbrechen.

4. Das bewegliche Fahrzeug gemäß Anspruch gemäß Anspruch 1, das **dadurch gekennzeichnet ist, dass**
der Übertragungsmechanismus (132) Folgendes umfasst:
ein basiskörperseitiges Kettenrad (133), das schwenkbar an dem Basiskörper (101) angebracht ist; und
ein antriebsseitiges Kettenrad (134), das auf der Lenkeinheit (102) montiert ist; und
eine Kette (135), die das basiskörperseitige Kettenrad (133) und das antriebsseitige Kettenrad (134) verbindet, und
wobei das Bremsteil (131) eine Drehung des basiskörperseitigen Kettenrads (133) in Bezug auf den Basiskörper (101) einschränkt.

## Revendications

1. Véhicule roulant (100) destiné à rouler sur une surface de plancher, comprenant:
une carrosserie de base (101); et
une unité de direction (102) montée de manière rotative sur la carrosserie de base (101), l'unité de direction (102) comportant:
une paire de roues (121); et
une paire de moteurs (122) qui entraînent indépendamment les roues respectives,
le véhicule roulant comprenant par ailleurs
des moyens de freinage (103) pour limiter la rotation de l'unité de direction (102) par rapport à la carrosserie de base (101) lorsque l'alimentation de courant est coupée, et pour libérer la limitation lorsque le courant est alimenté,
**caractérisé par le fait que** les moyens de freinage (103) comportent:
une partie de freinage (131) qui est montée sur la carrosserie de base (101) en une position séparée d'un pivot (120) de l'unité de direction (102); et
un mécanisme de transmission (132) qui transmet la force de freinage de la partie de freinage (131) à l'unité de direction (102).

2. Véhicule roulant selon la revendication 1, **caractérisé par le fait que**
une paire des moteurs (122) et des moyens de freinage (103) sont connectés à un seul dispositif de coupure (143) de manière à couper l'alimentation de courant vers les moteurs (122) et les moyens de freinage (103) à la fois.

3. Véhicule roulant selon la revendication 1, **caractérisé par le fait que**
une paire des moteurs (122) et des moyens de freinage (103) sont connectés respectivement à une pluralité de dispositifs de coupure (143) de manière à couper indépendamment l'alimentation de courant vers les moteurs (122) et les moyens de freinage (103).

4. Véhicule roulant selon la revendication 1, **caractérisé par le fait que**
le mécanisme de transmission (132) comporte:
un pignon latéral de carrosserie de base (133) qui est fixé de manière pivotante à la carrosserie de base (101);
un pignon latéral d'entraînement (134) qui est monté sur l'unité de direction (102); et
une chaîne (135) qui connecte le pignon latéral de carrosserie de base (133) et le pignon latéral d'entraînement (134), et
la partie de freinage (131) limite la rotation du pignon latéral de carrosserie de base (133) par rapport à la carrosserie de base (101).
